# FASCICULE DE BREVET EUROPEEN

(11) **EP 3 547 843 B1**
(45) Date de publication et mention de la délivrance du brevet: **16.06.2021**
(21) Numéro de dépôt: 17817787.9
(22) Date de dépôt: 30.11.2017
(51) Int. Cl.: A23G 4/10, A23L 29/30, A23G 4/06

(54) **PROCÉDÉ DE FABRICATION D'UNE COMPOSITION DE CHEWING GUM AVEC PATES À MÂCHER SANS CUISSON**
KOCHFREIES VERFAHREN ZUR HERSTELLUNG EINES KAUGUMMIS ENTHALTEND KONFEKT
PROCESS FOR THE MANUFACTURE OF A CHEWING GUM COMPOSITION COMPRISING CHEWABLE CANDIES WITHOUT COOKING

(30) Priorité: 01.12.2016 FR 1661808
(43) Date de publication de la demande: 09.10.2019
(73) Titulaire: Roquette Frères, 62136 Lestrem (FR)
(72) Inventeur: BUSOLIN, André, 59130 Lambersart (FR)
(74) Mandataire: Plasseraud IP
(86) Numéro de dépôt international: PCT/FR2017/053289
(87) Numéro de publication internationale: WO 2018/100291

(56) Documents cités:
- EP-A1- 0 758 528
- WO-A1-2014/161977
- WO-A1-2015/028764
- WO-A1-2016/001191
- FR-A1- 2 459 004
- US-A1- 2015 056 325
- US-A1- 2015 099 033

## Description

### DOMAINE TECHNIQUE DE L'INVENTION

La présente invention concerne un procédé de fabrication d'un chewing gum sans sucre, plus particulièrement une composition de chewing gum, avec une pâte à mâcher dont la teneur en matière grasse a été réduite, voire totalement supprimée, la pâte à mâcher sans sucre étant fabriquée sans phase de cuisson.

La présente invention est ainsi relative à un procédé de fabrication de ladite composition de chewing gum sans cuisson et sans exposer les composants de la composition à haute température.

### CONTEXTE DE L'INVENTION

Les produits de confiserie sont nombreux. Ils ont tous en commun la cuisson du sucre et/ou des polyols et leur mélange avec d'autres ingrédients pour obtenir des spécialités et des parfums différents.

Ces autres ingrédients sont classiquement des agents édulcorants, des matières grasses, des agents émulsifiants, des arômes, des colorants, des acides et/ou des bases minérales et/ou organiques et leurs sels et un ou plusieurs hydrocolloïdes épaississants et/ou gélifiants d'origine végétale ou animale tels que la gomme arabique, la gélatine, la pectine, les carraghénanes, les alginates, les celluloses et l'amidon et ses dérivés.

Les pâtes à mâcher ciblées se caractérisent par la présence de matières grasses qui leur donnent une texture tendre et souple, par opposition aux sucres cuits.

Les pâtes à mâcher contiennent également de l'air incorporé et du sucre qui est, en général, partiellement cristallisé afin d'obtenir une texture courte.

Les sirops de glucose participent à la texture en facilitant la formation du réseau gélifié ainsi que le bon foisonnement du produit.

Les pâtes à mâcher sont très appréciées par les consommateurs pour leur propriété de masticabilité importante les faisant se rapprocher d'un chewing-gum.

Contrairement au chewing-gum, la pâte à mâcher se dissout totalement dans la bouche après mastication et ne laisse aucun résidu non consommable. Ainsi, à la différence du chewing-gum, la pâte à mâcher ne comprend pas de gomme de base dans sa composition.

Les pâtes à mâcher peuvent être obtenues par cuisson d'un mélange de sucre et de sirop de glucose auxquels a été ajoutée de la matière grasse.

### Les pâtes à mâcher

Traditionnellement, les pâtes à mâcher classiques contiennent entre 4 et 8 %, parfois 10% de matière grasse. La masse cuite peut être ensuite aérée pour l'alléger par l'un des procédés bien connu des confiseurs comme par exemple l'étirage, le battage pouvant être sous pression, le mixage sous pression, l'extrusion. C'est cette aération et la présence de matières grasses qui donnent aux pâtes à mâcher leur texture caractéristique.

La matière grasse utilisée dans les confiseries peut être de différente origine. Le plus souvent il s'agit d'huile de palme hydrogénée. Dans certains cas, il peut également s'agir d'huile de coprah.

L'huile de palme est aujourd'hui très utilisée dans l'industrie agroalimentaire (80% des applications sont concernées). Son très faible coût de production, sa capacité à conserver les aliments et à les rendre moelleux font de ce produit l'élément phare des industriels.

L'huile de palme devrait plutôt porter le nom de « graisse de palme » car elle est dure à température ambiante à cause de sa richesse en acides gras saturés (qui est bien supérieure à celle des graisses animales comme le beurre, par exemple).

On en trouve dans une grande diversité de produits tels que les biscuits, confiseries, pains industriels, barres chocolatées, céréales, margarine, crème glacée, etc. (mais aussi dans certains savons, parfums, cosmétiques...).

Comme les acides gras trans, les acides gras saturés font également augmenter le mauvais cholestérol. Ainsi, rajouter de la matière grasse riche en acides gras saturés (ici huile de palme) dans une alimentation déjà très riche en acides gras saturés est mauvais pour la santé.

Qui plus est, la production d'huile de palme est associée à une déforestation massive, des émissions de gaz à effet de serre et un impact négatif sur la biodiversité.

Depuis peu, une inversion de tendance est à constater. Pour lutter contre ces méfaits écologiques et sanitaires, plusieurs grandes enseignes (fast-foods, grandes surfaces, entreprises agro-alimentaires...) ont choisi de réduire sensiblement l'utilisation de l'huile de palme dans la production de leurs denrées alimentaires, voire de la supprimer définitivement.

### Les chewing gums

Le chewing-gum quant à lui est classiquement un mélange de deux phases : une phase liquide (sirop, sucres dilués) et une phase solide composée de la gomme de base et de sucre cristallisé.

La formule standard de composition du chewing-gum est :
- 20% de gomme de base,
- 60% d'une phase cristallisée (ex : saccharose en poudre),
- 20% de sirop (18% sirop, 1% arôme, 1% d'autres matières).

Dans les recettes standards de fabrication de chewing-gum sans sucre, la gomme de base représente typiquement entre 28 et 40% des ingrédients mis en œuvre dans la fabrication des centres, le reste étant constitué majoritairement par des polyols, et plus faiblement par des édulcorants intenses de type aspartame ou acésulfame-K, des arômes, des antioxydants dans certains cas.

La nature de la gomme de base est également adaptée au type de chewing-gum fabriqué.

Elle peut également comprendre :
- des élastomères synthétiques et/ou naturels comme le polyisoprène, l'acétate de polyvinyle, le polyisobutylène, des latex, des résines comme les résines terpéniques, les esters et les alcools de polyvinyle,
- des matières grasses ou des cires comme par exemple la lanoline, les huiles végétales partiellement hydrogénées ou non, les acides gras, les esters partiels de glycérol, la paraffine, les cires microcristallines,
- des agents de charge comme le talc, le carbonate de calcium,
- des plastifiants d'élastomères comme le triacétate de glycérol, le monostéarate de glycérol, les dérivés de collophanes,
- des émulsifiants comme la lécithine, les esters de sorbitol,
- des colorants ou des agents de blanchiment,
- des antioxydants,
- des agents anticollants comme le mannitol.

Les édulcorants de charge sont constitués d'oses non fermentescibles pouvant être choisis parmi l'isomaltulose, l'allulose, le xylose, le xylulose, l'arabinose, le leucrose, le tagatose, le tréhalulose ou le raffinose.

De façon préférée, les édulcorants de charge sont constitués uniquement de polyols.

Les polyols jouent un rôle crucial dans la fabrication des centres de chewing-gum sans sucre, à la fois dans la qualité finale du produit obtenu (impact de la saveur sucrée et effet « long lasting », impact sur l'aromatisation, croustillance, dureté, masticabilité) mais également dans le procédé de préparation desdits centres.

Typiquement, les principaux polyols utilisés dans la production de chewing-gum ou bubble gum sans sucre sont le maltitol, le sorbitol, le mannitol et le xylitol.

Ces polyols sont utilisés à la fois sous la forme cristalline poudreuse et sous la forme liquide dans la formulation de ces centres.

Une composition de chewing-gum sans sucre contient généralement entre 65 et 80% de polyols, sous la forme pulvérulente et/ou liquide.

La recette de la gomme de base reste souvent secrète car celle-ci n'est pas constante. Elle varie en fonction du prix de la matière première.

Les ingrédients constitutifs de la gomme de base sont insolubles dans l'eau.

Par contre, la majorité des autres ingrédients constitutifs des chewing-gums est soluble dans l'eau (c'est-à-dire la salive ici). Au bout de 3 à 4 minutes de temps de mastication, les composés sont extraits (solubilisés) par la salive, d'où la perte de goût du chewing-gum.

Il reste en bouche la gomme de base et quelques arômes qui ne sont pas solubles dans l'eau, et/ou qui sont restés emprisonnées dans la matrice constituée par la gomme de base.

Du point de vue procédé de fabrication, on ajoute à la gomme de base les arômes, les édulcorants ou le sucre ainsi que divers additifs et auxiliaires de fabrication (tels que colorant, émulsifiant, stabilisant, bicarbonate).

Les ingrédients et la gomme de base sont mélangés dans un pétrin pendant 15 à 20 minutes.

En fin de malaxage, la pâte atteint une température de 50 °C environ.

La pâte de chewing-gum est déposée à l'intérieur d'une extrudeuse. Bien pressée, elle forme alors des bandes plus ou moins épaisses. Les bandes passent ensuite dans le laminoir et sont découpées en tablettes ou en noyaux appelés également centres.

Après refroidissement, les tablettes ou les centres sont maintenus à une température et une humidité contrôlées pendant 6 à 48 heures. Cette phase est très contrôlée, car la qualité des gommes à mâcher en dépend.

Les tablettes sont enveloppées dans un emballage en aluminium pour conserver toute leur saveur. Elles sont ensuite mises en paquets. Les centres sont dragéifiés avant d'être emballés dans des contenants en carton ou en plastique.

Quel que soit l'âge des consommateurs, la volonté d'avoir des produits de qualité est permanente.

La qualité des chewing-gums se mesure par plusieurs paramètres, dont la texture du chewing-gum (plutôt dur ou au contraire plutôt mou, croustillance persistante des dragées lors de la mastication) et le goût (saveur sucrée, effet rafraîchissant ou non, persistance de l'arôme lors de la mastication).

En effet, les consommateurs se plaignent très souvent de la disparition trop rapide à la fois de la croustillance et du goût lors de la mastication.

Les chewing-gums contiennent une phase cristalline importante, pouvant représenter jusqu'à 80% en poids sur sec des ingrédients mis en œuvre.

Cette phase cristalline donne des produits durs à l'attaque lors de la mastication, et longs à hydrater.

### L'association chewing gum /pâte à mâcher sans matière grasse

Dans sa demande de brevet WO 2016/001191, la société Demanderesse avait proposé de remplacer avantageusement la matière grasse dans les confiseries, en particulier de type pâte à mâcher, par une combinaison entre un hydrolysat d'amidon et une fibre végétale, qui conservait les qualités organoleptiques, en particulier gustatives, olfactives, visuelles et tactiles, au moins équivalentes voire supérieures, à celles des confiseries traditionnelles contenant de la matière grasse.

Ladite confiserie était caractérisée en ce qu'elle comprenait de 0,1 % à 25% d'un hydrolysat d'amidon, de préférence de 2% à 10%, plus préférentiellement de 3% à 8%, les pourcentages étant exprimés en poids par rapport au poids total de la confiserie.

Elle était également caractérisée en ce qu'elle comprenait de 0,1 % à 50 % de fibres, de préférence de 1 % à 10%, plus préférentiellement de 1 % à 6%, les pourcentages étant exprimés en poids par rapport au poids total de la confiserie.

La notion de confiserie pouvait s'entendre, dans la demande de brevet WO 2016/001191, d'une composition de chewing gum associé avec une pâte à mâcher.

La pâte à mâcher sans matière grasse était utilisée comme substitut de la phase cristalline du chewing gum, permettant d'obtenir une texture plus souple, et donc plus facile à hydrater.

Cette capacité de dissolution plus rapide avait permis lors de la dégustation une libération plus instantanée des arômes et/ou des acides contenus dans la recette. Ainsi, la perception aromatique était plus rapide et plus intense.

Selon un mode de réalisation de la demande de brevet WO 2016/001191, la confiserie pouvait être un chewing-gum contenant une gomme de base, en particulier de 5 % à 50 % en poids de gomme de base, et un mélange entre un hydrolysat d'amidon et une fibre végétale.

Selon un mode de réalisation particulier, ledit chewing gum avait une teneur réduite en polyols.

Cette diminution de la phase cristalline (polyols dans la majorité des cas) permettait de réduire fortement les troubles intestinaux (ballonnements, flatulences, effet laxatif) liés à une trop grande consommation de polyols.

Traditionnellement, la fabrication de chewing-gum nécessite un équipement bien particulier et coûteux, constitué au minimum d'un pétrin, d'un extrudeur et d'un laminoir.

Pour parvenir à fabriquer un chewing-gum contenant au plus 25% de gomme de base, la société Demanderesse, dans sa demande de brevet WO 2016/001191, avait proposé un procédé de fabrication comprenant par les étapes suivantes :
- mélange la pâte à mâcher selon l'invention avec la gomme base,
- laminage ou extrusion du mélange, et
- récupération des chewing-gums ou emballage en direct.

Quant à la préparation de la pâte à mâcher, elle comprenait les étapes de :
- mélange de 0,1 % à 25 % d'un hydrolysat d'amidon, de préférence de 2% à 10 %, plus préférentiellement de 3 % à 8 %, les pourcentages étant exprimés en poids par rapport au poids total de la confiserie, avec de 0,1 % à 50 % d'une fibre végétale, de préférence de 1 % à 10 %, plus préférentiellement de 1 % à 6 %, les pourcentages étant exprimés en poids par rapport au poids total de la confiserie,
- cuisson du mélange à une température comprise entre 100 et 150°C jusqu'à l'obtention de la matière sèche voulue.

Selon la demande de brevet WO 2016/001191, et pour une fabrication en continu, il était préféré de disperser les édulcorants, l'hydrolysat d'amidon et les fibres dans une cuve de mélange, préchauffer ce mélange à environ 70-80°C pour dissoudre les édulcorants, cuire le mélange sur cuiseur à une température comprise entre 100 et 150°C suivant la texture souhaitée et le type de confiserie préparée, puis ajouter l'émulsifiant, le ou les agents foisonnants, les arômes, les colorants, les principes actifs, et les édulcorants intenses.

La durée de cuisson dépendait du matériel utilisé.

La cuisson pouvait être effectuée sur des cuiseurs à double enveloppe à pression atmosphérique, sous vide partiel ou total ou sous pression, ou en continu sur des cuiseurs haute pression comme les échangeurs tubulaires, les échangeurs à plaques ou les jet-cookers.

Après la cuisson, l'émulsifiant, le ou les agents foisonnants, les arômes, colorants, acides et autres étaient ajoutés dans le sirop chaud à une température comprise entre 60 et 90 °C, le mélange était ensuite coulé sur une plaque de refroidissement, et on procédait à un étirage pendant environ une minute à 50-60 battements.

Une fois l'étirage effectué, on procédait à la mise en forme et au papillonnage des confiseries obtenues.

Quoi qu'il en soit, la solution proposée par la société Demanderesse dans sa demande de brevet WO 2016/001191 aussi efficace soit-elle, ne réussit pas complètement à s'affranchir des classiques étapes de cuisson de la pâte à mâcher pour la fabrication dudit chewing gum.

Désireuse d'améliorer encore l'état de la technique et surtout de répondre aux attentes toujours plus exigeantes des consommateurs, la Demanderesse s'est donc attachée à développer un procédé de fabrication d'un chewing gum associant une pâte à mâcher sans matière grasse, procédé ne nécessitant qu'une seule phase de mélange et sans mettre en œuvre de cuiseur.

### RESUME DE L'INVENTION

La présente invention est relative à un procédé de fabrication d'une composition de chewing gum contenant une pâte à mâcher sans matière grasse et sans gélatine selon la revendication 1, comprenant les étapes suivantes :
1) préparation de la phase liquide, composée de sirops de polyols et d'amidon,
2) éventuellement, addition de glycérine et/ou d'émulsifiant et/ou d'arômes,
3) introduction dans la phase liquide ainsi obtenue d'une fraction poudre composée d'ingrédients non cariogènes, et
4) introduction de la gomme base,
caractérisé en ce que ledit procédé est réalisé à une température inférieure à 100°C, de préférence à une température inférieure à 90°C, en particulier à une température comprise entre 30 et 80°C, de préférence entre 50 et 80°C, par exemple à environ 50°C,
le rapport en poids entre la quantité d'eau apportée par le sirop de polyols et la quantité d'amidon et/ou d'hydrolysat d'amidon, en particulier la maltodextrine, étant compris entre 1 et 4, de préférence entre 1 et 2 et plus préférentiellement entre 1 et 1,5.

Le procédé selon l'invention peut comprendre une étape 5) d'addition d'une fraction poudre supplémentaire composée d'ingrédients non cariogènes.

De préférence, au moins 50 % de la fraction poudre composée d'ingrédients non cariogènes est introduite à l'étape 3) et le reste de la fraction poudre à l'étape 5).

Les sirops de polyols introduits dans la phase liquide peuvent être choisis parmi les sirops de maltitol, sorbitol, mannitol, érythritol, xylitol, iditol, isomalt, lactitol, les sirops de glucose hydrogénés, seuls ou en mélange entre eux, et sont plus particulièrement des sirops de maltitol ou de sorbitol.

De préférence, le sirop de polyols est introduit dans la composition de chewing gum lors de l'étape 1) à une quantité comprise entre 15 et 60 % en poids de la composition de chewing gum, de préférence entre 20 et 50%, entre 25 et 45 % ou entre 30 et 40 %, par exemple environ 30 % ou environ 40 %, notamment lorsque le sirop de polyols a une matière sèche comprise entre 80 et 90 % en poids.

Préférentiellement, le sirop de polyols est introduit dans la composition de chewing gum lors de l'étape 1) à une quantité comprise entre 20 et 60 % en poids de la composition de chewing gum, par exemple entre 30 et 50 %, de préférence environ 40 % en poids de la composition de chewing gum, notamment lorsque le sirop de polyols a une matière sèche comprise entre 80 et 90 % en poids.

Plus préférentiellement encore, le sirop de polyols est introduit dans la composition de chewing gum lors de l'étape 1) à une quantité comprise entre 15 et 45 % en poids de la composition de chewing gum, de préférence entre 20 et 45%, ou entre 30 et 45 % ou entre 25 et 35 %, par exemple environ 30 %, notamment lorsque le sirop de polyols a une matière sèche comprise entre 80 et 90 % en poids.

L'amidon qui est introduit dans la phase liquide selon la présente invention peut être choisi parmi les amidons natifs, les amidons gélatinisés et les dérivés d'amidon, et est plus particulièrement un hydrolysat d'amidon.

De préférence, l'hydrolysat d'amidon est une maltodextrine, de préférence une maltodextrine qui présente un DE (Dextrose Equivalent) inférieur à 10, préférentiellement inférieur à 5, plus préférentiellement encore égal à 2. De préférence, la maltodextrine est introduite dans la phase liquide à une teneur comprise entre 2 et 7 % en poids de la composition de chewing gum, par exemple entre 2 et 6 %, ou entre 3 et 5 %, de préférence environ 3 % ou 5 % en poids de la composition de chewing gum. Préférentiellement, la maltodextrine est introduite dans la phase liquide à une teneur comprise entre 3 et 6% en poids de la composition de chewing gum, de préférence de l'ordre de 5 % en poids de la composition de chewing gum. Plus préférentiellement encore, la maltodextrine est introduite dans la phase liquide à une teneur comprise entre 2 et 7 % en poids de la composition de chewing gum, par exemple entre 2 et 6 %, entre 2 et 5 % ou entre 2 et 4 %, de préférence environ 3 % en poids de la composition de chewing gum.

Dans la présente invention, le rapport en poids entre la quantité d'eau apporté par le sirop de polyols et la quantité d'amidon et/ou d'hydrolysat d'amidon (en particulier la maltodextrine) est compris entre 1 et 4, de préférence entre 1 et 2, plus préférentiellement entre 1 et 1,5.

Les ingrédients non cariogènes de la fraction poudre introduite dans la phase liquide utilisés dans la présente invention peuvent être choisi parmi un sucre, un polyol, une fibre soluble, des minéraux et leurs mélanges.

De préférence, le polyol en poudre est choisi parmi le maltitol, le sorbitol, le mannitol, l'érythritol, le xylitol, l'iditol, le maltitol, l'isomalt et le lactitol, et est plus particulièrement le maltitol. Préférentiellement, le polyol est un sirop de maltitol déshydraté. Le polyol est introduit à une teneur comprise entre 0,1 et 60 % en poids de la composition de chewing gum, par exemple entre 1 et 55 %, entre 2 et 50 % ou entre 5 et 50 %. De préférence, le polyol est introduit à une teneur comprise entre 0,1 et 50 % en poids de la composition de chewing gum, par exemple entre 1 et 40 %, entre 2 et 30 % ou entre 3 et 20 %, plus préférentiellement de 5 % à 15 %. Préférentiellement, le polyol est introduit à une teneur comprise entre 20 et 60 % en poids de la composition de chewing gum, par exemple entre 25 et 55 % ou entre 30 et 55 %, préférentiellement de 35 % à 50 %.

La fibre soluble selon la présente invention est une fibre végétale soluble qui peut être choisie parmi les fructanes tels les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses. De préférence, la fibre végétale soluble est une maltodextrine branchée. La fibre peut être introduite à une teneur de 0 à 55 %, de préférence 0,1 % à 50 % en poids de la composition de chewing gum, par exemple entre 1 et 45%, entre 2 et 40 %, entre 3 et 35 %, plus préférentiellement de 10 % à 30 % et plus préférentiellement encore de 15 % à 25 %.

La ou les poudres d'ingrédients non cariogènes selon la présente invention peuvent présenter une granulométrie moyenne inférieure à 300 microns, de préférence inférieure à 150 microns et plus préférentiellement encore inférieure à 100 microns. De préférence, la ou les poudres d'ingrédients non cariogènes ont une granulométrie moyenne comprise entre 10 et 300 microns, entre 10 et 200 microns, ou entre 10 et 100 microns, de préférence entre 20 et 200 microns ou entre 20 et 100 microns.

Selon un aspect de l'invention, la gomme base peut être introduite à une teneur comprise entre 10 à 25 %, entre 12 et 23 %, entre 15 et 20 % en poids de la composition de chewing gum, de préférence environ 18 %.

Selon un aspect de la présente invention, on introduit dans la phase liquide de 0,1 % à 8 % d'ingrédients fonctionnels en poids de la composition de chewing gum en poids de la composition de chewing gum, préférentiellement de 0,1 % à 3 % d'au moins un arôme.

Il est également décrit une composition de chewing gum contenant une pâte à mâcher, ladite pate à mâcher contenant une fraction poudre composée d'ingrédients non cariogènes comprenant des polyols en poudre ayant une granulométrie moyenne inférieure à 300 microns, de préférence inférence à 150 microns, plus préférentiellement encore inférieure à 100 microns, obtenue par un procédé selon l'invention.

De préférence, la composition de chewing gum contenant une pâte à mâcher comprend entre 20 à 60 % en poids sec de la composition de chewing gum de polyols et d'amidon, de préférence de maltodextrine et du maltitol et une humidité finale d'au moins 2%, préférentiellement entre 15 à 45 % de phase liquide sur produit sec et une humidité finale entre 4 et 8 %.

De préférence, la composition de chewing gum contenant une pâte à mâcher comprend :
- le polyol provenant du sirop de polyols en une quantité comprise entre 10 et 55 % en poids de la composition de chewing gum, de préférence entre 15 et 45%, entre 20 et 40 % ou entre 25 et 35 %; de préférence, le polyol étant le maltitol ;
- l'amidon en une quantité comprise entre 2 et 7 % en poids de la composition de chewing gum, par exemple entre 2 et 6 %, ou entre 3 et 5 %, de préférence environ 3 % ou 5 % en poids de la composition de chewing gum ; de préférence l'amidon étant de la maltodextrine ;
- la fibre en une quantité de 0 à 55 % en poids de la composition de chewing gum , par exemple entre 1 et 45%, entre 2 et 40 %, entre 3 et 35 %, plus préférentiellement de 10 % à 30 % et plus préférentiellement encore de 15 % à 25 % ; de préférence sous forme de poudre ; de préférence, la fibre étant une maltodextrine branchée ;
- la poudre de polyols est introduite en une quantité comprise entre 0,1 et 60 % en poids de la composition de chewing gum, par exemple entre 1 et 55 %, entre 2 et 50 % ou entre 5 et 50 % ; le polyol étant le maltitol ; et
- la gomme de base est présente dans la composition de chewing gum en une quantité comprise entre 10 à 25 %, entre 12 et 23 %, entre 15 et 20 % en poids de la composition de chewing gum, de préférence environ 18 %.

### DESCRIPTION DETAILLEE DE L'INVENTION

La présente invention concerne un procédé de fabrication d'une composition de chewing gum contenant une pâte à mâcher fabriquée sans phase de cuisson, notamment sans qu'il ne soit nécessaire de cuire la pâte à mâcher pour évaporer une partie de l'eau, cette pâte à mâcher étant de préférence sans matière grasse et sans gélatine, et en particulier celle-ci étant sans sucre.

La pâte à mâcher selon la présente invention est définie comme étant composée d'une phase liquide comprenant des sirops de polyols et d'amidon, éventuellement de la glycérine et/ou un émulsifiant, et/ou des arômes ainsi qu'une fraction poudre composée d'ingrédients non cariogènes.

Au sens de la présente invention, on entend par « ingrédients non cariogènes » des composés de type sucres comme l'allulose, des polyols, des fibres, des amidons et/ou des minéraux.

Le chewing-gum selon la présente invention est défini comme étant composé de la pâte à mâcher ci-dessus définie et mélangée à de la gomme de base.

Le mélange peut être réalisé en discontinu dans des pétrins comme ceux utilisés pour la fabrication de chewing-gum ou dans des procédés en continus de type mono ou bis vis.

La double enveloppe est préférentiellement chauffée afin de faciliter l'hydratation des granules de l'ingrédient base amidon.

La température de la double enveloppe peut atteindre 80°C sans constituer une phase de cuisson. Cette température est aussi fonction de la plage de température de gélatinisation de l'ingrédient base amidon utilisé, par exemple dans le cas d'utilisation d'amidon utilisable à froid.

Les étapes de mélanges ont été optimisées pour maximiser les propriétés des ingrédients utilisés et notamment pour tenir compte de leur granulométrie.

Plus particulièrement, le procédé conforme à l'invention comprend les étapes suivantes :
1) préparation de la phase liquide composée de sirop de polyols et d'amidons,
2) éventuellement, addition de glycérine et/ou d'émulsifiant et/ou d'arômes,
3) introduction dans la phase liquide ainsi obtenue d'une fraction poudre composée d'ingrédients non cariogènes, et
4) introduction de la gomme base.

Facultativement, le procédé comprend en outre une étape de laminage ou extrusion et éventuellement une étape de récupération des chewing-gums et de stockage.

Dans la présente invention, le procédé est réalisé à une température inférieure à 100°C, de préférence à une température inférieure à 90°C, en particulier à une température comprise entre 30-80°C, 50-80°C, 40-70°C, 50-70°C, 40-60°C ou 40-60°C, par exemple à environ 50°C.

Dans la présente invention, le rapport en poids entre la quantité d'eau apportée par le sirop de polyols et la quantité d'amidon et/ou d'hydrolysat d'amidon, e particulier la maltodextrine, est compris entre 1 et 4, de préférence entre 1 et 2 et plus préférentiellement entre 1 et 1,5.

Dans la présente invention de préparation de pâte à mâcher sans cuisson, la texturation de la pâte à mâcher est réalisée en suivant étapes 1 à 3 du procédé de fabrication. C'est donc l'association d'amidon, de polyols et d'ingrédients non cariogènes mélangés de manière séquentielle qui permet de texturer la pâte à mâcher sans avoir à la cuire.

Le procédé de fabrication de la présente invention se concentre d'abord sur l'implémentation de la pâte à mâcher (étapes 1 à 3) puis sur son mélange à la gomme de base (étape 4) pour arriver à la fabrication d'un chewing-gum.

**La première étape consiste à préparer la phase liquide composée de sirop de polyols et d'amidon.**

Les sirops de polyols sont choisis parmi les sirops de maltitol, sorbitol, mannitol, érythritol, xylitol, iditol, isomalt, lactitol, les sirops de glucose hydrogénés, seuls ou en mélange entre eux, et sont plus particulièrement des sirops de maltitol ou de sorbitol ou un mélange de ceux-ci. Dans un mode de réalisation particulièrement préféré, le sirop de polyols est un sirop de maltitol.

La matière sèche desdits sirops est préférentiellement comprise entre 80 et 90 %, de préférence environ 85 %.

La température de dosage des sirops se situe entre 50 et 70°C.

Le pourcentage d'incorporation du sirop de polyols dans la composition de chewing gum est fonction du pourcentage de matière sèche des sirops, mais se situe entre 15 et 60 % en poids de la composition de chewing gum, par exemple entre 30 et 50 %, de préférence environ 40 % en poids de la composition de chewing gum, notamment lorsque le sirop de polyols a une matière sèche comprise entre 80 et 90 % en poids.

Selon un mode de réalisation alternatif de l'invention, le sirop de polyols est introduit dans la composition de chewing gum, en particulier lors de l'étape 1), à une quantité comprise entre 15 et 45 % en poids de la composition de chewing gum, de préférence entre 20 et 45%, ou entre 30 et 45 % ou entre 25 et 35 %, par exemple environ 30 %, notamment lorsque le sirop de polyols a une matière sèche comprise entre 80 et 90 % en poids.

Selon un autre mode de réalisation alternatif de l'invention, le sirop de polyols est introduit dans la composition de chewing gum, en particulier lors de l'étape 1), à une quantité comprise entre 15 et 60 % en poids de la composition de chewing gum, de préférence entre 20 et 50%, entre 25 et 45 % ou entre 30 et 40 %, par exemple environ 30 % ou environ 40 %, notamment lorsque le sirop de polyols a une matière sèche comprise entre 80 et 90 % en poids.

Les amidons sont choisis parmi les amidons natifs, les amidons gélatinisés et les dérivés d'amidon, plus particulièrement les hydrolysats d'amidon.

Cet ingrédient va lier un peu d'eau dans le produit fini et ainsi contribuer à sa stabilité dans le temps.

Dans la présente invention, le terme « amidons natifs » désigne tout amidon isolé de légumineuses, de céréales ou de tubercules.

La gélatinisation dudit amidon s'entend de la technologie de dissolution aqueuse des granules d'amidon bien connue de l'homme du métier.

Les dérivés d'amidon sont plus particulièrement des hydrolysats d'amidon, plus particulièrement encore des maltodextrines.

La dissolution de l'amidon, préférentiellement de la maltodextrine, permet la création d'un réseau gélifiant texturant la pâte à mâcher.

Au sens de la présente invention, et également du point de vue réglementaire, les maltodextrines ont un DE (Dextrose Equivalent) compris de 1 à 20. De tels produits sont par exemple les maltodextrines commercialisées par la Demanderesse sous les dénominations de GLUCIDEX® (DE disponibles = 1, 2, 6, 9, 12, 17, 19).

Selon l'invention, la maltodextrine est de préférence une maltodextrine possédant un DE inférieur à 10, et plus préférentiellement encore une maltodextrine possédant un DE inférieur à 5.

Selon un mode de réalisation particulièrement avantageux de l'invention, la maltodextrine possède un DE égal à 2.

L'ingrédient base amidon, quel qu'il soit, doit rester dans un pourcentage le plus faible possible pour ne pas compromettre le caractère non cariogène du produit fini.

Ainsi, la quantité d'amidon est comprise entre 3 et 6 % en poids de la composition de chewing gum, par exemple entre 4 et 6 %, de préférence environ 5 % en poids de la composition de chewing gum.

Dans un mode de réalisation alternatif de l'invention, la quantité d'amidon est comprise entre 2 et 7 % en poids de la composition de chewing gum, par exemple entre 2 et 6 %, entre 2 et 5 % ou entre 2 et 4 %, de préférence environ 3 % en poids de la composition de chewing gum. Notamment, la quantité d'amidon pourra être comprise entre 2 et 7 % en poids de la composition de chewing gum, par exemple entre 2 et 6 %, ou entre 3 et 5 %, de préférence environ 3 % ou 5 % en poids de la composition de chewing gum.

Dans cette première étape du procédé conforme à l'invention, on mélange la phase liquide afin d'hydrater au maximum l'amidon (gélatinisé ou non) ou la maltodextrine. Le sirop de polyol doit être tel qu'il n'apporte pas trop d'eau au mélange final. Ainsi, une phase de cuisson à 100°C nécessaire pour permettre l'évaporation de l'eau peut être évitée par le procédé selon la présente invention. L'ajout des ingrédients non cariogènes (polyols et fibres végétales) dans une étape ultérieure permettra d'accroitre la consistance de la pâte à mâcher.

Ainsi, la matière sèche du sirop de polyol doit être suffisamment élevée pour ne pas apporter trop d'eau à la recette finale, ce qui la rendrait beaucoup trop collante pour la fabrication et la conservation du produit. Une valeur trop faible de la matière sèche nécessiterait également une cuisson afin d'augmenter ce taux. Néanmoins, un taux trop élevé de matière sèche rendrait la manipulation du sirop plus difficile avec des températures de stockage et de manipulation supérieures à 70°C.

Par ailleurs, une quantité d'eau minimum est nécessaire pour pouvoir amorcer l'hydratation de(s) ingrédient(s) base amidon natif. L'amidon peut fixer jusqu'à 0,5 g d'eau par gramme d'amidon. Les quantités d'eau absorbées sont de l'ordre de 40 à 50 % avec un gonflement radial du grain. Un maïs cireux voit une augmentation du diamètre des grains de l'ordre de 80 % et son volume multiplié par 6. L'eau serait principalement associée aux parties amorphes. Le chauffage, en excès d'eau, d'une suspension d'amidon à des températures supérieures à 50°C entraîne un gonflement irréversible des grains et conduit à leur solubilisation. Quant aux amidons gélatinisés, ils ont des températures de début de gonflement inférieur à 50°C. Pour une plage de température donnée (plage de gélatinisation), le grain d'amidon va gonfler très rapidement et perdre sa structure semi-cristalline (perte de la biréfringence). On obtient un empois qui est constitué par des grains gonflés qui constituent la phase dispersée et de molécules dispersées (amylose principalement) qui épaississent la phase continue aqueuse. Les propriétés rhéologiques de l'empois dépendent de la proportion relative de ces deux phases et du volume de gonflement des grains. La plage de gélatinisation est variable selon l'origine botanique de l'amidon. La viscosité maximale est obtenue quand l'empois d'amidon renferme un grand nombre de grains très gonflés. Quand on continue de chauffer, les grains vont éclater et le matériel va se disperser dans le milieu cependant la solubilisation n'interviendra que pour des températures supérieures à 100°C. L'abaissement de température (par refroidissement) de l'empois d'amidon provoque une insolubilisation des macromolécules et une séparation des phases due à l'incompatibilité entre amylose et amylopectine puis on assiste à une cristallisation de ces macromolécules. Ce phénomène est connu sous l'appellation de rétrogradation. Quand un empois renferme de l'amylose, c'est cette première molécule qui subira la rétrogradation. Elle consiste en la formation de double hélice et à l'association de ces dernières pour former des « cristaux » qui donneront par l'intermédiaire de zone de jonction un réseau tridimensionnel. Ce réseau est formé très rapidement, en quelques heures. Au cours de l'élaboration de ce réseau, l'association des doubles hélices entre-elles par l'intermédiaire de liaison pont hydrogène déplace les molécules d'eau associées aux hélices et provoque une synérèse importante. Si certains monosaccharides peuvent diminuer la plage de gélatinisation, les saccharides d'une façon générale augmentent la plage de gélatinisation en mobilisant l'eau du milieu au détriment des structures du grain d'amidon.

C'est pourquoi le taux d'eau apporté par la phase liquide doit au minimum être égal au pourcentage d'ingrédients base amidons apportés dans cette première phase. Par exemple, le rapport en poids entre la quantité d'eau apporté par le sirop de polyols et la quantité d'amidon et d'hydrolysat d'amidon (en particulier la maltodextrine) est compris entre 1 et 2, de préférence entre 1 et 1,5.

La température de sirop doit être au minimum de 50°C lors de son introduction dans le processus de mélange, préférentiellement entre 50 et 80°C. La température de la solution permet d'augmenter la vitesse de dissolution et compenser les valeurs élevées d'extrait sec du mélange.

Par ailleurs, le temps de mélange doit être suffisant pour amorcer ce gonflement. Ce temps est très variable en fonction de la formule, type des ingrédients, ratio eau/ingrédients base amidon, type de sirop ou du matériel utilisé. Il peut par exemple être compris entre 3 et 10 minutes, de préférence de 3 à 7 minutes, par exemple environ 5 minutes.

La vitesse de rotation des pales minimum de 10 tours par minute doit assurer un mélange homogène et une uniformisation de la température du mélange qui doit être au maximum de 80°C pour éviter une quelconque évaporation.

**La seconde étape consiste éventuellement en l'addition de glycérine et/ou d'émulsifiant et d'arômes.**

On ajoute ici les ingrédients dits « mineurs » à la recette, c'est-à-dire des ingrédients importants pour le produit fini mais qui ne vont pas apporter de modifications majeures sur le procédé de fabrication du chewing gum.

En d'autres termes, ces ingrédients peuvent être introduits à n'importe quelle étape du procédé conforme à l'invention.

S'ils sont introduits dans la première étape du procédé conforme à l'invention, ils ne doivent entrer en compétition avec l'eau disponible (comme par exemple la glycérine qui est très avide d'eau) et ainsi rentrerait en compétition avec les autres ingrédients.

Cependant, tout ou partie de ces ingrédients sont introduits à cette seconde étape du procédé conforme l'invention, car leur incorporation en est plus facile.

Par exemple, un colorant soluble dans l'eau va se disperser plus rapidement et uniformément dans cette phase liquide.

Les ingrédients ont des fonctionnalités telles qu'acidifiant, humectant, plastifiant, aromatique, et sont introduits dans des quantités tels qu'exemplifiées ci-après.

Par exemple, on ajoutera de 0,1 % à 8 % en poids de la composition de chewing gum d'ingrédients fonctionnels tels que décrits ci-dessus, préférentiellement de 0,1 % à 3 % d'au moins un arôme en poids de la composition de chewing gum.

Ces ingrédients fonctionnels sont par exemple :
- des élastomères synthétiques et/ou naturels comme le polyisoprène, l'acétate de polyvinyle, le polyisobutylène, des latex, des résines comme les résines terpéniques, les esters et les alcools de polyvinyle,
- des matières grasses ou des cires comme par exemple la lanoline, les huiles végétales partiellement hydrogénées ou non, les acides gras, les esters partiels de glycérol, la paraffine, les cires microcristallines,
- des agents de charge comme le talc, le carbonate de calcium,
- des plastifiants d'élastomères comme le triacétate de glycérol, le monostéarate de glycérol, les dérivés de collophanes,
- de la glycérine, des acides, des bicarbonates, ou du stéarate de magnésium
- des arômes liquides, en poudre ou encapsulés,
- des émulsifiants comme la lécithine, les esters de sorbitol,
- des édulcorants intenses, des colorants ou des agents de blanchiment,
- des antioxydants,
- des agents anti-collants comme le mannitol.

Le mélange est généralement assez court, d'environ 2 à 5 minutes.

**La troisième étape consiste en l'introduction dans la phase liquide ainsi obtenue d'une fraction poudre composée d'ingrédients non cariogènes.**

Au sens de la présentent invention, on entend par « ingrédients non cariogènes » des composés de type sucres comme l'allulose, polyols, fibres, amidons, minéraux.

Leur fonction ici est celle d'agent de charge.

De façon préférée, les édulcorants de charge sont constitués de polyols.

Le polyol en poudre est choisi parmi le maltitol, le sorbitol, le mannitol, l'érythritol, le xylitol, l'iditol, l'isomalt et le lactitol ainsi que des mélanges de ceux-ci, et est plus particulièrement le maltitol.

Le polyol en poudre peut être avantageusement un sirop de polyol déshydraté. En particulier, le maltitol en poudre peut être avantageusement un sirop de maltitol déshydraté.

Plus particulièrement, le polyol est introduit à une teneur comprise entre 0,1 et 50 % en poids de la composition de chewing gum, par exemple entre 1 et 40 %, entre 2 et 30 % ou entre 3 et 20 %, plus préférentiellement de 5 % à 15 %.

Dans un autre mode de réalisation de l'invention, le polyol est introduit à une teneur comprise entre 20 et 60 % en poids de la composition de chewing gum, par exemple entre 25 et 55 % ou entre 30 et 55 %, préférentiellement de 35 % à 50 %.

Ainsi, le polyol est introduit à une teneur comprise entre 0,1 et 60 % en poids de la composition de chewing gum, par exemple entre 1 et 55 %, entre 2 et 50 % ou entre 5 et 50 %.

La fibre est quant à elle une fibre végétale soluble choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles ou les oligosaccharides solubles issus de plantes oléagineuses ou protéagineuses.

Dans un mode de réalisation de la présente invention, la fibre est introduite dans ce mélange à une teneur, exprimée en poids par rapport au poids total du chewing gum, de 0 à 55 %, de préférence 0,1 % à 50 % en poids de la composition de chewing gum, par exemple entre 1 et 45%, entre 2 et 40 %, entre 3 et 35 %, plus préférentiellement de 10 % à 30 % et plus préférentiellement encore de 15 % à 25%. Dans un mode de réalisation préféré, les fibres sont des maltodextrines branchées.

Par fibre soluble, on entend des fibres solubles dans l'eau. Les fibres peuvent être dosées selon différentes méthodes AOAC (Association of Officiai Analytical Chemists). On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon un mode de réalisation avantageux de la présente invention, le chewing gum comprend un mélange d'une maltodextrine et des fibres végétales solubles qui sont des maltodextrines branchées.

On entend par maltodextrines branchées (MDB), les maltodextrines spécifiques identiques à celles décrites dans le brevet EP 1.006.128 dont la Demanderesse est titulaire. Ces MDB ont l'avantage de représenter une source de fibres indigestibles bénéfiques pour le métabolisme et pour l'équilibre intestinal.

Selon la présente invention, lesdites maltodextrines branchées sont caractérisées en ce qu'elles présentent entre 15 et 50% de liaisons glucosidiques 1-6, préférentiellement entre 22% et 45%, plus préférentiellement entre 20% et 40%, et encore plus préférentiellement entre 25% et 35%, une teneur en sucres réducteurs inférieure à 20%, préférentiellement comprise entre 2% et 20%, plus préférentiellement entre 2,5% et 15%, et encore plus préférentiellement entre 3,5% et 10%, un indice de polymolécularité inférieur à 5, préférentiellement compris entre 1 et 4, plus préférentiellement entre 1,5 et 3, et une masse moléculaire moyenne en nombre (Mn) inférieure à 4500 g/mole, préférentiellement comprise entre 400 et 4500 g/mole, plus préférentiellement entre 500 et 3000 g/mole, encore préférentiellement entre 700 et 2800 g/mole, encore plus préférentiellement comprise entre 1000 et 2600 g/mole.

En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole.

Certaines sous-familles de MDB décrites dans la susdite demande peuvent aussi être utilisées conformément à l'invention. Il s'agit par exemple de MDB de haut poids moléculaire présentant une teneur en sucres réducteurs au plus égale à 5 et une Mn comprise entre 2000 et 4500 g/mole. Les MDB de bas poids moléculaires présentant une teneur en sucres réducteurs comprise entre 5 et 20% et une masse moléculaire en nombre Mn inférieure à 2000 g/mole peuvent également être employées.

Dans un autre mode de réalisation avantageux de la présente invention, on pourra également utiliser, conformément à l'invention, les maltodextrines hyperbranchées hypoglycémiantes décrites dans la demande FR 1251810 dont la Demanderesse est titulaire.

Selon un mode particulièrement avantageux de la présente invention, le chewing gum comprend du NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

Les intérêts d'ajouter des fibres et plus particulièrement des maltodextrines branchées comme le NUTRIOSE® au chewing gum de la présente invention sont multiples. Outre l'aspect nutritif et l'apport de fibres très bien tolérées par l'organisme, l'ajout de ces fibres présente également un intérêt technique non négligeable. En effet, ces fibres sont constituées de longues chaînes polymériques glucidiques et jouent donc un rôle comme agent texturant dans les chewing gums. La présence de fibres permet donc encore d'augmenter l'élasticité du produit final.

Ainsi, la durabilité de la masticabilité est augmentée par la présence de ces longues chaînes qui modifient la texture du produit. Leur caractère branché diminue considérablement et avantageusement leur tendance à rétrograder, ce qui permet d'envisager leur utilisation dans les confiseries gélifiées où l'absence de rétrogradation est nécessaire, en particulier lors d'un stockage prolongé.

La présence de maltodextrines branchées permet d'éviter les phénomènes de « cold flow » rencontrés dans les confiseries fabriquées par coulage sur une table de refroidissement après cuisson de tous les ingrédients. Dans ce type de procédé de fabrication, le phénomène de « cold flow » peut être observé. Il s'agit de la capacité de la pâte à mâcher à se déformer sans qu'il n'y ait de force appliquée. C'est donc sous l'effet de son propre poids que la confiserie aura tendance à couler et à s'écraser. Ceci est un défaut que les confiseurs cherchent absolument à éviter.

La présence de maltodextrines branchées permet également d'augmenter la température de transition vitreuse ou Tg de la partie amorphe de ladite confiserie. Cette augmentation de la Tg permet de rigidifier la structure au sein de la confiserie et permet par conséquent d'apporter une bonne tenue à la masticabilité.

Cet ajout d'ingrédients non cariogènes à cette étape permet d'augmenter le volume du mélange et d'obtenir une pâte lisse.

Ce sont les agents de charge de la pâte à mâcher.

Le choix des ingrédients est important (type amorphe ou cristallin, granulométrie, coextrusion, atomisation) afin de minimiser la sensation poudreuse en bouche.

En effet, si l'on veut obtenir une texture lisse en bouche similaire à une pâte à mâcher, il est important d'avoir des cristaux très fins ou des particules qui vont rapidement s'hydrater et se dissoudre en bouche.

Pour cela, la ou les poudres d'ingrédients non cariogènes, notamment la/les poudre(s) de polyols et/ou la/les poudre(s) de fibres, en particulier de maltodextrines branchées, devront avoir une granulométrie moyenne inférieure à 300 microns, de préférence inférieure à 150 microns et plus préférentiellement encore inférieure à 100 microns. En particulier, les polyols devront avoir une granulométrie moyenne inférieure à 300 microns, de préférence inférieure à 150 microns et plus préférentiellement encore inférieure à 100 microns.

Par exemple, la ou les poudres d'ingrédients non cariogènes, notamment la/les poudre(s) de polyols et/ou la/les poudre(s) de fibres, en particulier de maltodextrines branchées, peuvent avoir une granulométrie moyenne comprise entre 10 et 300 microns, entre 10 et 200 microns, ou entre 10 et 100 microns, de préférence entre 20 et 200 microns ou entre 20 et 100 microns.

Ces mesures de granulométrie sont réalisées sur le MASTERSIZER 3000 de chez MALVERN en voie poudre AERO S (avec une ouverture de trémie : entre 1 et 2 mm, Pression : 0 Bar, Vibrations : entre 50 et 75%).

Des exemples spécifiques d'ingrédients avec leur granulométrie sont décrits ci-dessous.

| Ingrédients | Granulométrie (µm) |
|---|---|
| Nutriose® FB06 poudre | 100 |
| Neosorb® P100T | 140 |
| Xylisorb® 90 | 90 |
| Xylisorb® 300 | 300 |
| SweetPearl® 25FD sirop déshydraté | 25 |
| Mannitol 35 | 55 |
| Neosorb® P60W | 300 |
| SweetPearl® P35 | 40 |
| SweetPearl® P90 | 90 |
| SweetPearl® 300FD sirop déshydraté | 280 |

Les produits de la gamme Neosorb® commercialisés par la société Demanderesse sont des polyalcools obtenus par hydrogénation catalytique d'un hydrolysat d'amidon, plus particulièrement du sorbitol, obtenu par hydrogénation du glucose.

Les produits de la gamme Nutriose® commercialisés par la société Demanderesse sont des dérivés d'amidon de blé ou de maïs partiellement hydrolysés, qui contiennent jusqu'à 85 % de fibres végétales.

Les produits de la gamme Sweet Pearl® commercialisés par la société Demanderesse contiennent 92% de maltitol et 8% de carbohydrates hydrogénés.

Les produits de la gamme Xylisorb® commercialisés par la société Demanderesse sont du xylitol.

Un polyol contenant d'autres carbohydrates hydrogénés peut également accélérer l'hydratation par la salive.

Par exemple, le SweetPearl® 25FD commercialisé par la société Demanderesse contient 92% de maltitol et 8% de carbohydrates hydrogénés qui facilite sa dissolution.

Par ailleurs, le fait d'atomiser un polyol cristallin avec une solution amorphe permet d'augmenter sa solubilité et ainsi diminuer l'aspect rugueux en bouche.

Les fibres peuvent faire partie de l'agent de charge de la pâte à mâcher. Suivant le même principe que les polyols, la granulométrie moyenne sera dans les mêmes valeurs.

L'introduction des poudres se fait graduellement afin d'assurer un mélange homogène. Le temps de mélange se situe entre 3 et 10 minutes dans un pétrin classique en fonction des quantités à introduire.

Le résultat du mélange selon les étapes 1 à 3 du procédé selon l'invention s'apparente à une pâte à mâcher sans sucre, sans matière grasse et sans gélatine.

Selon un mode de réalisation du procédé selon l'invention, il peut être choisi de fractionner l'apport de la fraction poudre composée d'ingrédients non cariogènes dans la phase liquide en au moins deux étapes distinctes, de manière à mieux maîtriser la viscosité de la pâte obtenue, le temps de mélange et/ou la qualité du mélange.

Selon un mode de réalisation de l'invention, le procédé comprend une étape 5) d'addition d'une fraction poudre supplémentaire composée d'ingrédients non cariogènes.

Selon un mode de réalisation de l'invention, au moins 30 % de la fraction poudre composée d'ingrédients non cariogènes est introduite à l'étape 3) et le reste de la fraction poudre à l'étape 5).

Selon un autre mode de réalisation de l'invention, entre 30 % et 80%, entre 40% et 60%, préférentiellement entre 50% et 75% de la fraction poudre composée d'ingrédients non cariogènes est introduite à l'étape 3) et le reste de la fraction poudre à l'étape 5).

Selon un mode de réalisation préféré de l'invention, au moins 50 % de la fraction poudre composée d'ingrédients non cariogènes est introduite à l'étape 3) et le reste de la fraction poudre à l'étape 5).

Il est ainsi recommandé :
- d'introduire dans la phase liquide au moins 50 % de la fraction poudre composée d'ingrédients non cariogènes,
- d'introduire la gomme base et
- de compléter avec la partie restante de ladite fraction poudre.

**La quatrième et dernière étape consiste en l'introduction de la gomme de base.**

L'introduction de la gomme de base dans la pâte à mâcher conduit à l'obtention d'un chewing gum. La gomme de base est introduite dans cette étape à une teneur de 10 à 25 % en poids de la composition de chewing gum, à une température d'au plus 95°C.

Par exemple, la gomme de base est présente dans la composition de chewing gum en une quantité comprise entre 10 à 25 %, entre 12 et 23 %, entre 15 et 20 % en poids de la composition de chewing gum, de préférence environ 18 %.

La recette de la gomme de base reste souvent secrète car celle-ci n'est pas constante. Elle varie en fonction du prix de la matière première. La nature La nature de la gomme de base est également adaptée au type de chewing-gum fabriqué. Elle peut comprendre des élastomères synthétiques et/ou naturels comme le polyisoprène, l'acétate de polyvinyle, le polyisobutylène, des latex, des résines comme les résines terpéniques, les esters et les alcools de polyvinyle.

Dans cette quatrième étape, la gomme de base peut être chauffée pour abaisser sa viscosité et passer au-dessus de son point de Tg (transition vitreuse).

Dans ce cas elle acquière un comportement viscoélastique et caoutchouteux.

En se rapprochant du point de ramollissement de la gomme de base, la viscosité de cette dernière baisse et cela facilite la dispersion de la gomme de base dans le mélange.

Le point de ramollissement d'une gomme de base se situe en général entre 50 et 100°C. Ce ramollissement de la matière n'apporte que très peu d'énergie thermique au mélange final et n'est en aucun point une cuisson car la température finale du produit reste de préférence inférieure à 60°C.

Les autres ingrédients tels que édulcorants intenses, colorants, arômes liquides, en poudre ou encapsulés, acides, bicarbonates, stéarate de magnésium peuvent être introduit lors de la préparation de ladite pâte à mâcher ou après l'introduction de la gomme de base.

Comparativement à la recette de chewing-gum contenant une pâte à mâcher avec cuisson selon l'enseignement de la demande de brevet WO 2016/001191, les ingrédients dissous lors de la préparation recristallisent en partie en fin cristaux non perceptible en bouche. Quand la cristallisation est bien maîtrisée, la taille des particules est généralement inférieure à 25 microns.

Dans le cas de la présente invention, il n'y a pas de cuisson et une très faible partie des ingrédients recristallise. Les ingrédients de départ se retrouvent donc peu modifiés dans le produit final, d'où l'importance de la granulométrie des composés pour un aspect agréable en bouche de la pâte à mâcher et/ou du chewing gum, en particulier celle de la fraction poudre composée d'ingrédients non cariogènes.

L'intérêt est donc d'obtenir un produit le plus lisse possible en bouche et qui se conserve dans le temps.

Ainsi, dans un mode de réalisation très particulier, la présente invention est relative à un procédé de fabrication d'une composition de chewing gum contenant une pâte à mâcher sans matière grasse et sans gélatine, comprenant les étapes suivantes :
1) préparation de la phase liquide, composée de sirops de polyols et d'amidon,
2) éventuellement, addition de glycérine et/ou d'émulsifiant et/ou d'arômes,
3) introduction dans la phase liquide ainsi obtenue d'une fraction poudre composée d'ingrédients non cariogènes incluant un polyol et/ou une fibre, et
4) introduction de la gomme base,
caractérisé en ce que
- ledit procédé est réalisé à une température inférieure à 100°C, de préférence à une température inférieure à 90°C, en particulier à une température comprise entre 30-80°C, de préférence entre 50 et 80°C par exemple à environ 50°C ;
- le sirop de polyols est introduit en une quantité comprise entre 15 et 60 % en poids de la composition de chewing gum, de préférence entre 20 et 50%, entre 25 et 45 % ou entre 30 et 40 %, par exemple environ 30 % ou environ 40 %, notamment lorsque le sirop de polyols a une matière sèche comprise entre 80 et 90 % en poids ;
- l'amidon est introduit en une quantité comprise entre 2 et 7 % en poids de la composition de chewing gum, par exemple entre 2 et 6 %, ou entre 3 et 5 %, de préférence environ 3 % ou 5 % en poids de la composition de chewing gum ;
- le rapport en poids entre la quantité d'eau apporté par le sirop de polyols et la quantité d'amidon est compris entre 1 et 4, de préférence entre 1 et 2, plus préférentiellement entre 1 et 1,5 ;
- la ou les poudres d'ingrédients non cariogènes ont une granulométrie moyenne inférieure à 300 microns, de préférence inférieure à 150 microns et plus préférentiellement encore inférieure à 100 microns ;
- la fibre est introduite en une quantité de 0 à 55 % en poids de la composition de chewing gum, par exemple entre 1 et 45%, entre 2 et 40 %, entre 3 et 35 %, plus préférentiellement de 10 % à 30 % et plus préférentiellement encore de 15 % à 25 %;
- la poudre de polyols est introduite en une quantité comprise entre 0,1 et 60 % en poids de la composition de chewing gum, par exemple entre 1 et 55 %, entre 2 et 50 % ou entre 5 et 50 % ; et
- la gomme de base est présente dans la composition de chewing gum en une quantité comprise entre 10 à 25 %, entre 12 et 23 %, entre 15 et 20 % en poids de la composition de chewing gum, de préférence environ 18 %.

La composition de chewing gum contenant une pâte à mâcher obtenue par le procédé selon l'invention, comprend des polyols en poudre ayant une granulométrie moyenne inférieure à 300 microns, de préférence inférence à 150 microns, plus préférentiellement encore inférieure à 100 microns.

La composition de chewing gum, de préférence sans matière grasse et sans sucre, ainsi obtenue comprend une humidité finale d'au moins 2%, de préférence d'au moins 3 %, plus préférentiellement encore entre 4 et 8 %. Cette humidité provient majoritairement de la phase liquide mais aussi des autres ingrédients.

La composition de chewing gum, de préférence sans matière grasse et sans sucre, ainsi obtenue comprend entre 20 et 60 % en poids sec de la composition de chewing gum de polyols et d'amidon, de préférence de maltodextrine et du maltitol, de préférence entre 30 et 50 %.

La composition de chewing gum, de préférence sans matière grasse et sans sucre, ainsi obtenue comprend des polyols, de l'amidon, de la gomme de base, de la poudre de polyols et facultativement des fibres.

La composition peut comprendre ces différents composants dans les quantités suivantes :
- le polyol provenant du sirop de polyols en une quantité comprise entre 10 et 55 % en poids de la composition de chewing gum, de préférence entre 15 et 45%, entre 20 et 40 % ou entre 25 et 35 %; de préférence, le polyol étant le maltitol ;
- l'amidon en une quantité comprise entre 2 et 7 % en poids de la composition de chewing gum, par exemple entre 2 et 6 %, ou entre 3 et 5 %, de préférence environ 3 % ou 5 % en poids de la composition de chewing gum ; de préférence l'amidon étant de la maltodextrine ;
- la fibre en une quantité de 0 à 55 % en poids de la composition de chewing gum , par exemple entre 1 et 45%, entre 2 et 40 %, entre 3 et 35 %, plus préférentiellement de 10 % à 30 % et plus préférentiellement encore de 15 % à 25 % ; de préférence sous forme de poudre ; de préférence, la fibre étant une maltodextrine branchée ;
- la poudre de polyols est introduite en une quantité comprise entre 0,1 et 60 % en poids de la composition de chewing gum, par exemple entre 1 et 55 %, entre 2 et 50 % ou entre 5 et 50 % ; le polyol étant le maltitol ; et
- la gomme de base est présente dans la composition de chewing gum en une quantité comprise entre 10 à 25 %, entre 12 et 23 %, entre 15 et 20 % en poids de la composition de chewing gum, de préférence environ 18 %.

De préférence, la composition de chewing gum, de préférence sans matière grasse et sans sucre, ainsi obtenue comprend du maltitol, de la maltodextrine, de la gomme de base, de la poudre de maltitol et des maltodextrines branchées.

La poudre de polyols, en particulier de maltitol, présente une granulométrie moyenne inférieure à 300 microns, de préférence inférieure à 150 microns et plus préférentiellement encore inférieure à 100 microns. Notamment, la granulométrie moyenne peut être comprise entre 10 et 300 microns, entre 10 et 200 microns, ou entre 10 et 100 microns, de préférence entre 20 et 200 microns ou entre 20 et 100 microns.

Par « environ » est entendu la valeur plus ou moins 10 %, de préférence plus ou moins 5 %. Par exemple, environ 100 signifie entre 90 et 110, de préférence entre 95 et 105.

L'invention sera mieux comprise à l'aide des exemples qui suivent, lesquels se veulent illustratifs et non limitatifs.

### EXEMPLES

### Exemple 1 : préparation du chewing gum sans sucre selon le procédé de l'invention

Deux recettes A et B sont fabriquées avec les ingrédients présentés dans le tableau suivant.

| Chewing gum selon l'invention | Recette A | Recette B |
|---|---|---|
| Gomme base SOLSONA T de Cafosa | 18,00 | 18,00 |
| SWEETPEARL® 25FD de ROQUETTE | 9,90 | |
| SWEETPEARL® 300FD de ROQUETTE | | 9,90 |
| Waxy N200 de ROQUETTE | 1,50 | 1,50 |
| LYCASIN® 85/55 - sirop de maltitol de ROQUETTE | 42,00 | 42,00 |
| Glycérine | 1,00 | 1,00 |
| GLUCIDEX® 2 de ROQUETTE | 4,38 | 4,38 |
| NUTRIOSE® FB06 de ROQUETTE | 20,00 | 20,00 |
| Liqueur de Menthe Fraiche M0060136 de Mane | 0,45 | 0,45 |
| Menthe Fraiche SD M0060167 de Mane | 2,00 | 2,00 |
| Acesulfame K | 0,12 | 0,12 |
| Sucralose | 0,15 | 0,15 |
| Poudre Physcool de Mane | 0,50 | 0,50 |
| | 100,00 | 100,00 |

Le mélange est réalisé sur un pétrin IKa de 200 grammes dont la double enveloppe est chauffée à 50°C.

Les pales ont une vitesse de rotation de 30 tours par minute.

Tous les ingrédients sont pesés et le sirop de maltitol ainsi que la gomme de base sont stockés dans une étuve à 50°C pendant 3 heures.

Le cycle de mélange est le suivant :

| | | |
|---|---|---|
| - | 0 min | Introduction du LYCASIN® 85/55 (sirop de maltitol) et du GLUCIDEX® 2 (maltodextrine) en totalité |
| | | Démarrage du mélange |
| - | 5 min | Introduction de la glycérine et de l'amidon waxy N200 |
| - | 6 min | Introduction du NUTRIOSE ® FB06 puis du SWEETPEARL® 25 FD ou 300 FD |
| - | 8 min | Introduction de l'arôme liquide, des édulcorants intenses |
| - | 10 min | Introduction de la gomme de base |
| - | 12 min | Introduction des arômes poudre |
| - | 14 min | Fin du malaxage |

La température de la pâte en fin de mélange est de l'ordre de 45-55°C.

On laisse refroidir la pâte jusqu'à une température de 30 et 40°C, avant la phase classique de formage sous une forme de bande, puis laminage et enfin découpage.

### Discussion

Les longues chaines de carbohydrates du sirop de maltitol vont apporter la structure de la pâte à mâcher.

L'utilisation du LYCASIN® 85/55 à 85% de matière sèche permet de monter son taux d'utilisation à 42%. Cela apporte une quantité importante de produit dissout, donc non granuleux sans générer une pâte trop collante.

La maltodextrine, GLUCIDEX® 2, va servir de rétenteur d'eau et ainsi améliorer la conservation du produit. Elle peut être facilement remplacée par un amidon pré gélatinisé de type PREGEFLO® C100 qui ne nécessite pas également de haute température de gélatinisation.

Le ratio Eau du sirop / GLUCIDEX® 2 de 1,4 permet de maximiser le contact entre ces 2 produits.

Par ailleurs, un mélange plutôt à 50°C et durant 3 à 5 minutes contribue à cette optimisation.

Comme indiqué précédemment les agents de charges d'un chewing gum sans sucre sont majoritairement cristallins et donnent une texture râpeuse.

Pour arriver à une texture proche d'une pâte à mâcher avec cuisson, les paramètres qui influent la dissolution des ingrédients ont été observés.

Certains paramètres ne sont pas accessibles à toutes modifications telles que la température de la bouche, l'acidité du produit...

La société Demanderesse a donc travaillé sur la surface d'échange et le choix morphologique des ingrédients.

Plus une poudre est finement divisée, plus sa vitesse de dissolution est grande. C'est dans cette optique que les poudres utilisées ont été sélectionnées ou broyées pour avoir une granulométrie inférieure à 150 microns et préférentiellement inférieure à 100 microns.

Un produit ayant des défauts de cristallinité voit sa vitesse de solubilité augmenter.

Le SWEETPEARL® 25FD a une granulométrie fine et a été fabriqué avec un sirop d'une richesse inférieure, de l'ordre de 92%.

L'atomisation d'une fine poudre cristalline par une solution de type amorphe permet d'augmenter l'hygroscopicité de la poudre.

En outre, le mannitol peut être atomisé avec une solution de fibre soluble de type NUTRIOSE® FB06.

Tous les composés peuvent être mis dans cet état amorphe ; par exemple, en les refroidissant dans leur forme liquide sans qu'ils ne cristallisent, notamment en évaporant le solvant de la solution sans que le soluté ne cristallise.

Le broyage peut donner aussi des produits en tout ou partie plus au moins amorphe.

Un produit amorphe est généralement extrêmement soluble dans les solvants où le solide cristallin correspondant est soluble.

La vitesse de dissolution peut d'ailleurs être très rapide, cela d'autant plus qu'il sera finement divisé.

Les agents de charge utilisés sont :
- la fibre soluble NUTRIOSE® FB06 pour son coté amorphe, broyée à une granulométrie inférieure à 100 microns, et
- un maltitol à dissolution rapide, le SweetPearl 25 FD.

L'amidon waxy de fine granulométrie apporte une sensation de « gras » en bouche.

La glycérine joue un rôle tampon pour la conservation.

Si le produit fini se retrouve dans une ambiance sèche, soit inférieure à 40% HR (humidité relative), son caractère avide d'eau (Aw de l'ordre de 0,13 à 20°C) permet d'en retenir un maximum.

Comme la formule du produit fini contient déjà 5% d'eau, son action dans des ambiances humides (supérieure à 70% HR) reste limitée.

Les ingrédients dits mineurs sont là pour apporter la saveur aromatique et sucrée.

Le mélange pâte à mâcher est suffisamment cohésif pour pouvoir diminuer le pourcentage de gomme de base. Ainsi, avec 18% de gomme de base, la pâte a un taux d'étirement équivalent à un chewing gum standard du marché. La pâte peut être extrudée et ainsi former des pièces de chewing-gum.

### Analyses sensorielles

Les analyses organoleptiques sur le produit montrent des attributs sensoriels diffèrent d'un chewing gum à savoir :
- une dureté plus faible dès la mise en bouche,
- une hydratation plus rapide qu'un chewing gum,
- une texture initiale plus proche d'une pâte à mâcher que celle d'un chewing gum,
- un impact aromatique plus important et une sensation de juteux accrue.

Après 1 minute, le produit se transforme rapidement en chewing gum traditionnel.

La Recette B a une texture de pâte à mâcher au départ, souple mais la granulométrie du SWEETPEARL® 300FD est encore trop élevée.

La Recette A est caractéristique d'une pâte à mâcher, souple, lisse, juteuse en début de mâche puis on retrouve la mâche plaisante d'un chewing gum.

La fine granulométrie du SWEETPEARL® 25FD permet de réduire la sensation des cristaux en bouche.

### Exemple 2 : Exemple comparatif de fabrication de chewing gum sans sucre

Deux recettes sont ici élaborées :
- Recette C : Fabrication d'un chewing-gum contenant de la pâte à mâcher avec cuisson selon l'enseignement de la demande de brevet WO 2016/001191, et
- Recette D : Fabrication d'un chewing-gum classique.

### Composition de la Recette C

| | |
|---|---|
| Mannitol 60 | 15,00 |
| Gomme de base Flama T - Cafosa SA | 23,00 |
| Arôme liquide Fraise E1422791 - Mane SA | 0,30 |
| Physcool poudre - Mane SA | 0,50 |
| Sucralose | 0,15 |
| Acésulfame K | 0,12 |
| Arôme poudre fraise - Mane SA | 2,00 |
| Glycérine | 1,00 |
| Citrique acide | 1,00 |
| Malique acide | 0,50 |
| Pâte à mâcher | 56,43 |
| | 100,00 |

Le mélange est réalisé sur un pétrin de 200 grammes de type Ika avec une double enveloppe chauffé à 50°C.

Au préalable, la pâte à mâcher aura été réalisée dans un cuiseur à une température de 126°C pour augmenter son extrait sec d'une quinzaine de point soit environ 92 % de matière sèche au final (cf. conditions de cuisson de l'exemple 1 de la demande de brevet WO 2016/00191).

Cette pâte est refroidie en dessous de 80°C pour développer la cristallisation et par la suite doser dans le mixer à une température de l'ordre de 60°C.

Le cycle de mélange est le suivant :

| | |
|---|---|
| 0 min | Introduction de la gomme de base préchauffée à 50°C et du mannitol |
| 5 min | Introduction de la glycérine |
| 6 min | Introduction de l'arôme liquide, des édulcorants intenses, des acides |
| 8 min | Introduction de la pâte à mâcher préchauffé à 50°C |
| 12 min | Introduction des arômes poudres |
| 14 min | Fin du malaxage |

Le processus de mise en forme, découpe est identique à celui décrit pour les recettes A & B. Les caractéristiques des pâtes étant similaires, pâte souple, cohésive,... les paramètres de production vont être similaires.

### Composition de la Recette D

| | |
|---|---|
| Gomme de base | 30,00 |
| NEOSORB® P60 W sorbitol | 47,73 |
| Mannitol 60 | 7,00 |
| LYCASIN® 85/55 Maltitol sirop (85 % DS) | 11,00 |
| Glycérine | 1,00 |
| Arôme poudre | 1,50 |
| Arôme liquide | 1,50 |
| Acesulfame K | 0,12 |
| Sucralose | 0,15 |
| | 100,00 |

Le mélange sera réalisé sur un pétrin de 200 grammes de type Ika avec une double enveloppe chauffé à 50°C.

Le cycle de mélange est le suivant :

| | |
|---|---|
| 0 min | Introduction de la gomme de base préchauffée à 50°C et ½ sorbitol |
| 5 min | Introduction de la glycérine, Lycasin 85/55 préchauffé à 50°C |
| 7 min | Introduction du mannitol, des édulcorants intenses |
| 8 min | Introduction du ½ sorbitol restant |
| 10 min | Introduction de l'arôme liquide |
| 12 min | Introduction de l'arôme poudre |
| 14 min | Fin malaxage |

La température de la pâte en fin de mélange est de l'ordre de 45-55°C.

On laisse refroidir la pâte jusqu'à une température de 30 et 40°C, avant la phase classique de formage sous une forme de bande, puis laminage et enfin découpage.

### Discussion :

La recette C avec pâte à mâcher et avec cuisson donne un produit très souple à la première mâche et une hydratation rapide qui libère une forte intensité aromatique.

L'attribut juteux est fortement amélioré ainsi qu'une mâche lisse en bouche.

De plus, malgré un faible pourcentage de gomme de base, la sensation de volume en bouche reste élevée. Les recettes dudit chewing-gum avec pâte à mâcher sans cuisson ont des caractéristiques très proches.

La recette D du chewing-gum classique révèle des attributs sensoriels à l'opposé de ceux cités précédemment. A savoir, une dureté initiale importante, un produit rugueux, difficile à hydrater dont la perception aromatique prend du temps à éclore.

Après 3 minutes de mâche, la perception en bouche se rapproche car la majorité de la phase soluble a disparu et que seule la gomme de base donne le ressenti de la mâche. Le produit a bien une attaque souple, lisse semblable à une pâte à mâcher classique et devient par la suite un chewing-gum.

## Revendications

1. Procédé de fabrication d'une composition de chewing gum contenant une pâte à mâcher sans matière grasse et sans gélatine, comprenant les étapes suivantes :
1) préparation de la phase liquide, composée de sirops de polyols et d'amidon,
2) éventuellement, addition de glycérine et/ou d'émulsifiant et/ou d'arômes,
3) introduction dans la phase liquide ainsi obtenue d'une fraction poudre composée d'ingrédients non cariogènes, et
4) introduction de la gomme base,
**caractérisé en ce que** ledit procédé est réalisé à une température inférieure à 100°C, de préférence à une température inférieure à 90°C, en particulier à une température comprise entre 30-80°C, de préférence entre 50-80°C, par exemple à environ 50°C,
le rapport en poids entre la quantité d'eau apportée par le sirop de polyols et la quantité d'amidon et/ou d'hydrolysat d'amidon, en particulier la maltodextrine, étant compris entre 1 et 4, de préférence entre 1 et 2 et plus préférentiellement entre 1 et 1,5.

2. Procédé selon la revendication 1, **caractérisé en ce qu'**il comprend une étape 5) d'addition d'une fraction poudre supplémentaire composée d'ingrédients non cariogènes.

3. Procédé selon la revendication 2, **caractérisée en ce qu'**au moins 50 % de la fraction poudre composée d'ingrédients non cariogènes est introduite à l'étape 3) et le reste de la fraction poudre à l'étape 5).

4. Procédé selon l'une quelconque des revendications 1 à 3, **caractérisé en ce que** les sirops de polyols introduits dans la phase liquide sont choisis parmi les sirops de maltitol, sorbitol, mannitol, érythritol, xylitol, iditol, isomalt, lactitol, les sirops de glucose hydrogénés, seuls ou en mélange entre eux, et sont plus particulièrement des sirops de maltitol ou de sorbitol.

5. Procédé selon l'une quelconque des revendications 1 à 4, **caractérisé en ce que** le sirop de polyols est introduit dans la composition de chewing gum lors de l'étape 1) à une quantité comprise entre 15 et 60 % en poids de la composition de chewing gum, de préférence entre 20 et 50%, entre 25 et 45 % ou entre 30 et 40 %, par exemple environ 30 % ou environ 40 %, notamment lorsque le sirop de polyols a une matière sèche comprise entre 80 et 90 % en poids.

6. Procédé selon la revendication 5, **caractérisé en ce que** le sirop de polyols est introduit dans la composition de chewing gum lors de l'étape 1) à une quantité comprise entre 20 et 60 % en poids de la composition de chewing gum, par exemple entre 30 et 50 %, de préférence environ 40 % en poids de la composition de chewing gum, notamment lorsque le sirop de polyols a une matière sèche comprise entre 80 et 90 % en poids.

7. Procédé selon la revendication 5, **caractérisé en ce que** le sirop de polyols est introduit dans la composition de chewing gum lors de l'étape 1) à une quantité comprise entre 15 et 45 % en poids de la composition de chewing gum, de préférence entre 20 et 45%, ou entre 30 et 45 % ou entre 25 et 35 %, par exemple environ 30 %, notamment lorsque le sirop de polyols a une matière sèche comprise entre 80 et 90 % en poids.

8. Procédé selon la revendication 1-7, **caractérisé en ce que** l'amidon qui est introduit dans la phase liquide est choisi parmi les amidons natifs, les amidons gélatinisés et les dérivés d'amidon, et est plus particulièrement un hydrolysat d'amidon.

9. Procédé selon la revendication 8, **caractérisé en ce que** l'hydrolysat d'amidon est une maltodextrine, de préférence une maltodextrine qui présente un Dextrose Equivalent (DE) inférieur à 10, préférentiellement inférieur à 5, plus préférentiellement encore égal à 2.

10. Procédé selon la revendication 9, **caractérisé en ce que** la maltodextrine est introduite dans la phase liquide à une teneur comprise entre 2 et 7 % en poids de la composition de chewing gum, par exemple entre 2 et 6 %, ou entre 3 et 5 %, de préférence environ 3 % ou 5 % en poids de la composition de chewing gum.

11. Procédé selon la revendication 10, **caractérisé en ce que** la maltodextrine est introduite dans la phase liquide à une teneur comprise entre 3 et 6% en poids de la composition de chewing gum, de préférence de l'ordre de 5 % en poids de la composition de chewing gum.

12. Procédé selon la revendication 10, **caractérisé en ce que** la maltodextrine est introduite dans la phase liquide à une teneur comprise entre 2 et 5 % ou entre 2 et 4 %, de préférence environ 3 % en poids de la composition de chewing gum.

13. Procédé selon l'une quelconque des revendications 1 à 12, **caractérisé en ce que** les ingrédients non cariogènes de la fraction poudre introduite dans la phase liquide sont choisi parmi un sucre, un polyol, une fibre soluble, des minéraux et leurs mélanges.

14. Procédé selon la revendication 13, **caractérisé en ce que** le polyol en poudre est choisi parmi le maltitol, le sorbitol, le mannitol, l'érythritol, le xylitol, l'iditol, le maltitol, l'isomalt et le lactitol, et est plus particulièrement le maltitol.

15. Procédé selon la revendication 14, **caractérisé en ce que** le polyol est un sirop de maltitol déshydraté.

16. Procédé selon l'une quelconque des revendications 13-15, **caractérisé en ce que** le polyol est introduit à une teneur comprise entre 0,1 et 60 % en poids de la composition de chewing gum, par exemple entre 1 et 55 %, entre 2 et 50 % ou entre 5 et 50 %.

17. Procédé selon la revendication 16, **caractérisé en ce que** le polyol est introduit à une teneur comprise entre 0,1 et 50 % en poids de la composition de chewing gum, par exemple entre 1 et 40 %, entre 2 et 30 % ou entre 3 et 20 %, plus préférentiellement de 5 % à 15 %.

18. Procédé selon la revendication 16, **caractérisé en ce que** le polyol est introduit à une teneur comprise entre 20 et 60 % en poids de la composition de chewing gum, par exemple entre 25 et 55 % ou entre 30 et 55 %, préférentiellement de 35 % à 50 %.

19. Procédé selon l'une quelconque des revendications 13-18, **caractérisé en ce que** la fibre soluble est une fibre végétale soluble choisie parmi les fructanes tels les Fructo-oligosaccharides (FOS) et l'inuline, les Gluco- oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses.

20. Procédé selon la revendication 19, **caractérisé en ce que** la fibre végétale soluble est une maltodextrine branchée.

21. Procédé selon l'une quelconque des revendications 19-20, **caractérisé en ce que**, la fibre est introduite à une teneur de 0,1 à 55 %, de préférence 0,1 % à 50 % en poids de la composition de chewing gum, par exemple entre 1 et 45%, entre 2 et 40 %, entre 3 et 35 %, plus préférentiellement de 10 % à 30 % et plus préférentiellement encore de 15 % à 25 %.

22. Procédé selon l'une quelconque des revendications 1 à 21, **caractérisée en ce que** la ou les poudres d'ingrédients non cariogènes ont une granulométrie moyenne inférieure à 300 microns, de préférence inférieure à 150 microns et plus préférentiellement encore inférieure à 100 microns.

23. Procédé selon la revendication 22, **caractérisée en ce que** la ou les poudres d'ingrédients non cariogènes ont une granulométrie moyenne comprise entre 10 et 300 microns, entre 10 et 200 microns, ou entre 10 et 100 microns, de préférence entre 20 et 200 microns ou entre 20 et 100 microns.

24. Procédé selon l'une quelconque des revendications 1 à 23, **caractérisé en ce que** la gomme base est introduite à une teneur comprise entre 10 à 25 %, entre 12 et 23 %, entre 15 et 20 % en poids de la composition de chewing gum, de préférence environ 18 %.

25. Procédé selon l'une quelconque des revendications 1 à 24, **caractérisé en ce que** l'on introduit dans la phase liquide de 0,1 % à 8 % d'ingrédients fonctionnels en poids de la composition de chewing gum en poids de la composition de chewing gum, préférentiellement de 0,1 % à 3 % d'au moins un arôme.

## Patentansprüche

1. Verfahren zur Herstellung einer Kaugummizusammensetzung, die eine fettfreie und gelatinefreie Kaupaste enthält, umfassend die folgenden Schritte:
1) Zubereitung der flüssigen Phase, bestehend aus Polyol- und Stärkesirupen,
2) optional Zusatz von Glycerin und/oder Emulgator und/oder Aromen,
3) Einbringen eines Pulveranteils in die so erhaltene flüssige Phase, der aus nicht-kariogenen Bestandteilen besteht, und
4) Einbringen der Gummibasis,
**dadurch gekennzeichnet, dass** das Verfahren bei einer Temperatur unter 100 °C, bevorzugt bei einer Temperatur unter 90 °C, insbesondere bei einer Temperatur zwischen 30 °C und 80 C, bevorzugt zwischen 50 °C und 80 °C, beispielsweise bei etwa 50 °C, durchgeführt wird,
wobei das Gewichtsverhältnis zwischen der vom Polyolsirup zugeführten Wassermenge und der Menge an Stärke und/oder Stärkehydrolysat, insbesondere Maltodextrin, zwischen 1 und 4, bevorzugt zwischen 1 und 2 und besonders bevorzugt zwischen 1 und 1,5 liegt.

2. Verfahren nach Anspruch 1, **dadurch gekennzeichnet, dass** es einen Schritt 5) der Zugabe eines zusätzlichen Pulveranteils umfasst, der aus nicht-kariogenen Bestandteilen besteht.

3. Verfahren nach Anspruch 2, **dadurch gekennzeichnet, dass** wenigstens 50 % des aus nicht-kariogenen Bestandteilen bestehenden Pulveranteils in Schritt 3) und der Rest des Pulveranteils in Schritt 5) eingebracht wird.

4. Verfahren nach einem der Ansprüche 1 bis 3, **dadurch gekennzeichnet, dass** die in die flüssige Phase eingebrachten Polyolsirupe ausgewählt sind aus Maltit-, Sorbit-, Mannit-, Erythrit-, Xylit-, Idit-, Isomalt-, Lactitsirupen und hydrierten Glucosesirupen, allein oder im Gemisch miteinander, und insbesondere Maltit- oder Sorbitsirupe sind.

5. Verfahren nach einem der Ansprüche 1 bis 4, **dadurch gekennzeichnet, dass** der Polyolsirup in Schritt 1) in die Kaugummizusammensetzung in einer Menge zwischen 15 und 60 Gew.-% der Kaugummizusammensetzung, bevorzugt zwischen 20 und 50 %, zwischen 25 und 45 % oder zwischen 30 und 40 %, beispielsweise etwa 30 % oder etwa 40 %, eingebracht wird, insbesondere wenn der Polyolsirup einen Trockensubstanzgehalt zwischen 80 und 90 Gew.-% aufweist.

6. Verfahren nach Anspruch 5, **dadurch gekennzeichnet, dass** der Polyolsirup in Schritt 1) in die Kaugummizusammensetzung in einer Menge zwischen 20 und 60 Gew.-% der Kaugummizusammensetzung, beispielsweise zwischen 30 und 50 %, bevorzugt etwa 40 Gew.-% der Kaugummizusammensetzung, eingebracht wird, insbesondere wenn der Polyolsirup einen Trockensubstanzgehalt zwischen 80 und 90 Gew.-% aufweist.

7. Verfahren nach Anspruch 5, **dadurch gekennzeichnet, dass** der Polyolsirup in Schritt 1) in die Kaugummizusammensetzung in einer Menge zwischen 15 und 45 Gew.-% der Kaugummizusammensetzung, bevorzugt zwischen 20 und 45 %, oder zwischen 30 und 45 % oder zwischen 25 und 35 %, beispielsweise etwa 30 %, eingebracht wird, insbesondere wenn der Polyolsirup einen Trockensubstanzgehalt zwischen 80 und 90 Gew.-% aufweist.

8. Verfahren nach Anspruch 1-7, **dadurch gekennzeichnet, dass** die Stärke, die in die flüssige Phase eingebracht wird, ausgewählt ist aus nativen Stärken, gelatinisierten Stärken und Stärkederivaten und insbesondere ein Stärkehydrolysat ist.

9. Verfahren nach Anspruch 8, **dadurch gekennzeichnet, dass** das Stärkehydrolysat ein Maltodextrin ist, bevorzugt ein Maltodextrin, das ein Dextroseäquivalent (DE) von kleiner 10, bevorzugt kleiner 5 und besonders bevorzugt gleich 2, aufweist.

10. Verfahren nach Anspruch 9, **dadurch gekennzeichnet, dass** das Maltodextrin in die flüssige Phase mit einem Gehalt zwischen 2 und 7 Gew.-% der Kaugummizusammensetzung, beispielsweise zwischen 2 und 6 %, oder zwischen 3 und 5 %, bevorzugt etwa 3 oder 5 Gew.-% der Kaugummizusammensetzung, eingebracht wird.

11. Verfahren nach Anspruch 10, **dadurch gekennzeichnet, dass** das Maltodextrin in die flüssige Phase mit einem Gehalt zwischen 3 und 6 Gew.-% der Kaugummizusammensetzung, bevorzugt im Bereich von etwa 5 Gew.-% der Kaugummizusammensetzung, eingebracht wird.

12. Verfahren nach Anspruch 10, **dadurch gekennzeichnet, dass** das Maltodextrin in die flüssige Phase mit einem Gehalt zwischen 2 und 5 % oder zwischen 2 und 4 %, bevorzugt etwa 3 Gew.-%, der Kaugummizusammensetzung eingebracht wird.

13. Verfahren nach einem der Ansprüche 1 bis 12, **dadurch gekennzeichnet, dass** die nicht-kariogenen Bestandteile des in die flüssige Phase eingebrachten Pulveranteils ausgewählt sind aus einem Zucker, einem Polyol, einer löslichen Faser, Mineralien und Mischungen davon.

14. Verfahren nach Anspruch 13, **dadurch gekennzeichnet, dass** das pulverförmige Polyol ausgewählt ist aus Maltit, Sorbit, Mannit, Erythrit, Xylit, Idit, Maltit, Isomalt und Lactit, und insbesondere Maltit ist.

15. Verfahren nach Anspruch 14, **dadurch gekennzeichnet, dass** das Polyol ein dehydrierter Maltitsirup ist.

16. Verfahren nach einem der Ansprüche 13-15, **dadurch gekennzeichnet, dass** das Polyol mit einem Gehalt zwischen 0,1 und 60 Gew.-% der Kaugummizusammensetzung, beispielsweise zwischen 1 und 55 %, zwischen 2 und 50 % oder zwischen 5 und 50 % eingebracht wird.

17. Verfahren nach Anspruch 16, **dadurch gekennzeichnet, dass** das Polyol mit einem Gehalt zwischen 0,1 und 50 Gew.-% der Kaugummizusammensetzung, beispielsweise zwischen 1 % und 40 %, zwischen 2 % und 30 % oder zwischen 3 und 20 %, besonders bevorzugt zwischen 5 % und 15 %, eingebracht wird.

18. Verfahren nach Anspruch 16, **dadurch gekennzeichnet, dass** das Polyol mit einem Gehalt zwischen 20 und 60 Gew.-% der Kaugummizusammensetzung, beispielsweise zwischen 25 % und 55 % oder zwischen 30 % und 55 %, bevorzugt zwischen 35 % und 50 %, eingebracht wird.

19. Verfahren nach einem der Ansprüche 13-18, **dadurch gekennzeichnet, dass** die lösliche Faser eine lösliche pflanzliche Faser ist, ausgewählt aus Fructanen wie Fructooligosacchariden (FOS) und Inulin, Gluco-Oligosacchariden (GOS), Isomaltooligosacchariden (IMOs), Trans-Galacto-Oligosacchariden (TOS), Pyrodextrinen, Polydextrose, verzweigten Maltodextrinen, unverdaulichen Dextrinen und löslichen Oligosacchariden aus ölhaltigen oder proteinhaltigen Pflanzen.

20. Verfahren nach Anspruch 19, **dadurch gekennzeichnet, dass** die lösliche Pflanzenfaser ein verzweigtes Maltodextrin ist.

21. Verfahren nach einem der Ansprüche 19 bis 20, **dadurch gekennzeichnet, dass** die Faser mit einem Gehalt von 0,1 % bis 55 %, bevorzugt 0,1 bis 50 Gew.-% der Kaugummizusammensetzung, beispielsweise zwischen 1 % und 45 %, zwischen 2% und 40 %, zwischen 3 % und 35 %, stärker bevorzugt von 10 % bis 30 % und noch stärker bevorzugt von 15 % bis 25 %, eingebracht wird.

22. Verfahren nach einem der Ansprüche 1 bis 21, **dadurch gekennzeichnet, dass** das oder die Pulver nicht-kariogener Inhaltsstoffe eine durchschnittliche Teilchengröße von weniger als 300 Mikron, bevorzugt von weniger als 150 Mikron und noch stärker bevorzugt von weniger als 100 Mikron aufweisen.

23. Verfahren nach Anspruch 22, **dadurch gekennzeichnet, dass** das oder die Pulver nicht-kariogener Bestandteile eine durchschnittliche Teilchengröße zwischen 10 und 300 Mikron, zwischen 10 und 200 Mikron oder zwischen 10 und 100 Mikron, bevorzugt zwischen 20 und 200 Mikron oder zwischen 20 und 100 Mikron, aufweisen.

24. Verfahren nach einem der Ansprüche 1 bis 23, **dadurch gekennzeichnet, dass** die Gummibasis mit einem Gehalt von zwischen 10 bis 25 %, zwischen 12 und 23 %, zwischen 15 und 20 Gew.-% der Kaugummizusammensetzung, bevorzugt etwa 18 %, eingebracht wird.

25. Verfahren nach einem der Ansprüche 1 bis 24, **dadurch gekennzeichnet, dass** in die flüssige Phase 0,1 bis 8 Gew.-% funktionelle Bestandteile der Kaugummizusammensetzung, bevorzugt 0,1 bis 3 Gew.-% wenigstens eines Aromas eingebracht werden.

## Claims

1. A process for producing a chewing gum composition containing a fat-free and gelatin-free chewing paste, comprising the following steps:
1) preparing the liquid phase, composed of starch and polyol syrups,
2) optionally, adding glycerol and/or emulsifier and/or flavorings,
3) introducing into the liquid phase thus obtained a powder fraction composed of non-cariogenic ingredients, and
4) introducing the gum base,
**characterized in that** said process is carried out at a temperature of less than 100°C, preferably at a temperature of less than 90°C, in particular at a temperature of between 30-80°C, preferably between 50-80°C, for example at approximately 50°C,
the weight ratio between the amount of water introduced by the polyol syrup and the amount of starch and/or of starch hydrolysate, in particular maltodextrin, is between 1 and 4, preferably between 1 and 2, more preferentially between 1 and 1.5.

2. The process as claimed in claim 1, **characterized in that** it comprises a step 5) of adding an additional powder fraction composed of non-cariogenic ingredients.

3. The process as claimed in claim 2, **characterized in that** at least 50% of the powder fraction composed of non-cariogenic ingredients is introduced in step 3) and the remainder of the powder fraction is introduced in step 5).

4. The process as claimed in any one of claims 1 to 3, **characterized in that** the polyol syrups introduced into the liquid phase are chosen from maltitol, sorbitol, mannitol, erythritol, xylitol, iditol, isomalt and lactitol syrups, and hydrogenated glucose syrups, alone or as a mixture with one another, and are more particularly maltitol or sorbitol syrups.

5. The process as claimed in any one of claims 1 to 4, **characterized in that** the polyol syrup is introduced into the chewing gum composition during step 1) in an amount of between 15% and 60% by weight of the chewing gum composition, preferably between 20% and 50%, between 25% and 45% or between 30% and 40%, for example approximately 30% or approximately 40%, in particular when the polyol syrup has a solids content of between 80% and 90% by weight.

6. The process as claimed in claim 5, **characterized in that** the polyol syrup is introduced into the chewing gum composition during step 1) in an amount of between 20% and 60% by weight of the chewing gum composition, for example between 30% and 50%, preferably approximately 40% by weight of the chewing gum composition, in particular when the polyol syrup has a solids content of between 80% and 90% by weight.

7. The process as claimed in claim 5, **characterized in that** the polyol syrup is introduced into the chewing gum composition during step 1) in an amount of between 15% and 45% by weight of the chewing gum composition, preferably between 20% and 45%, or between 30% and 45% or between 25% and 35%, for example approximately 30%, in particular when the polyol syrup has a solids content of between 80% and 90% by weight.

8. The process as claimed in claims 1-7, **characterized in that** the starch which is introduced into the liquid phase is chosen from native starches, gelatinized starches and starch derivatives, and is more particularly a starch hydrolysate.

9. The process as claimed in claim 8, **characterized in that** the starch hydrolysate is a maltodextrin, preferably a maltodextrin which has a Dextrose Equivalent (DE) of less than 10, preferentially less than 5, and even more preferentially equal to 2.

10. The process as claimed in claim 9, **characterized in that** the maltodextrin is introduced into the liquid phase in a content of between 2% and 7% by weight of the chewing gum composition, for example between 2% and 6%, or between 3% or 5%, preferably approximately 3% or 5% by weight of the chewing gum composition.

11. The process as claimed in claim 10, **characterized in that** the maltodextrin is introduced into the liquid phase in a content of between 3% and 6% by weight of the chewing gum composition, preferably about 5% by weight of the chewing gum composition.

12. The process as claimed in claim 10, **characterized in that** the maltodextrin is introduced into the liquid phase in a content of between 2% and 7% by weight of the chewing gum composition, for example between 2% and 6%, between 2% and 5% or between 2% and 4%, preferably approximately 3% by weight of the chewing gum composition.

13. The process as claimed in any one of claims 1 to 12, **characterized in that** the non-cariogenic ingredients of the powder fraction introduced into the liquid phase are chosen from a sugar, a polyol, a soluble fiber, minerals and mixtures thereof.

14. The process as claimed in claim 13, **characterized in that** the powdered polyol is chosen from maltitol, sorbitol, mannitol, erythritol, xylitol, iditol, maltitol, isomalt and lactitol, and is more particularly maltitol.

15. The process as claimed in claim 14, **characterized in that** the polyol is a dehydrated maltitol syrup.

16. The process as claimed in any one of claims 13-15, **characterized in that** the polyol is introduced in a content of between 0.1% and 60% by weight of the chewing gum composition, for example between 1% and 55%, between 2% and 50% or between 5% and 50%.

17. The process as claimed in claim 16, **characterized in that** the polyol is introduced in a content of between 0.1% and 50% by weight of the chewing gum composition, for example between 1% and 40%, between 2% and 30% or between 3% and 20%, more preferentially from 5% to 15%.

18. The process as claimed in claim 16, **characterized in that** the polyol is introduced in a content of between 20% and 60% by weight of the chewing gum composition, for example between 25% and 55% or between 30% and 55%, preferentially from 35% to 50%.

19. The process as claimed in any one of claims 13-18, **characterized in that** the soluble fiber is a soluble plant fiber chosen from fructans, such as fructooligosaccharides (FOSs) and inulin, glucooligosaccharides (GOSs), isomaltooligosaccharides (IMOs), trans-galactooligosaccharides (TOSs), pyrodextrins, polydextrose, branched maltodextrins, indigestible dextrins and soluble oligosaccharides derived from oleaginous or protein-producing plants.

20. The process as claimed in claim 19, **characterized in that** the soluble plant fiber is a branched maltodextrin.

21. The process as claimed in either one of claims 19-20, **characterized in that** the fiber is introduced in a content of from 0% to 55%, preferably 0.1% to 50% by weight of the chewing gum composition, for example between 1% and 45%, between 2% and 40%, between 3% and 35%, more preferentially from 10% to 30% and even more preferentially from 15% to 25%.

22. The process as claimed in any one of claims 1 to 21, **characterized in that** the non-cariogenic ingredient powder(s) have an average particle size of less than 300 microns, preferably less than 150 microns and even more preferentially less than 100 microns.

23. The process as claimed in claim 22, **characterized in that** the non-cariogenic ingredient powder(s) have an average particle size of between 10 and 300 microns, between 10 and 200 microns or between 10 and 100 microns, preferably between 20 and 200 microns or between 20 and 100 microns.

24. The process as claimed in any one of claims 1 to 23, **characterized in that** the gum base is introduced in a content of between 10% and 25%, between 12% and 23%, between 15% and 20% by weight of the chewing gum composition, preferably approximately 18%.

25. The process as claimed in any one of claims 1 to 24, **characterized in that** from 0.1% to 8% of functional ingredients, by weight of the chewing gum composition by weight of the chewing gum composition, preferentially from 0.1% to 3% of at least one flavoring, are introduced into the liquid phase.
